# EUROPEAN PATENT APPLICATION

(11) **EP 1 004 914 A1**
(43) Date of publication of application: **31.05.2000**
(21) Application number: 98309686.8
(22) Date of filing: 25.11.1998
(51) Int. Cl.: G02B 6/44, G02B 6/50

(54) **Improvements in and relating to cabling arrangements**

(71) Applicant: PINACL COMMUNICATION SYSTEMS LTD, Rhyl, Denbighshire LL18 5TZ (GB)
(72) Inventor: Watson, Vince, Boddelwyddan, Denbighshire LL18 5TZ (GB)
(74) Representative: Brandon, Paul Laurence

(57) **Abstract**

A cabling arrangement comprising a sheathed optical fibre bundle (6, 8, 26, 28, 46, 48) within a carrier tube (4, 24, 44) in which the carrier tube is slightly larger than the sheath and the sheathed optical fibre bundle is capable of longitudinal movement relative to the carrier tube. A corresponding method of installing an optical fibre member in a tubular installation pathway is also disclosed.

## Description

### Field of the Invention

The present invention relates to cabling arrangements and to methods of installing optical fibre members.

### Background to the Invention

It is known from EP-A-0108590 to provide a method of installing optical fibre transmission lines which utilises the drag force generated by gas flow to propel optical fibre transmission lines through tubular installation pathways, for insertion of such lines. The optical fibre transmission lines usually comprise optical fibres enclosed in a common jacket. In practice, the jacket comprised an outer sheath of a foamed polyethylene material. More recently cured acrylate resin coatings with embedded glass beads have been used. This latter type is particularly difficult to strip away from the fibres.

Such a material can be blown into tubular installation pathways, but it is not feasible for it to be withdrawn again. Primarily this is because the very feature of the foamed polyethylene material or the resin/glass beads combination that enhances its blowability also means that it has a relatively high coefficient of friction with respect to the tubular installation pathway. That is, there is too much drag/resistance for it to be withdrawn. Thus, redundant optical fibres can be left in the installation pathways using up much needed space so it can be impractical for them to be replaced when, for instance, it is desired to upgrade or modify the transmission line.

Furthermore, in an often crowded installation pathway, say a duct, it can be difficult to install a fibre optic transmission line, even if a line it is to replace has previously been withdrawn.

To protect the optical fibres in other types of tubes from the effects of moisture, they are surrounded by a hydrophillic compound. Typically a silicone based material is used or a silicone-free thixotropic gel. When heated under fire conditions, these materials will decompose giving off unwanted and in some cases toxic smoke and other gaseous substances. Petroleum jelly type products have also been used as moisture barriers to fill the space between the optical fibres and their surrounding sheath, but above about 80°C these materials will melt and drip. The moisture barrier materials can also be difficult to remove from the fibres at branch-out.

It is an aim of embodiments of the present invention to obviate or overcome at least one disadvantage of the prior art, whether referred to herein or otherwise.

### Summary of the Invention

According to the present invention in a first aspect, there is provided a cabling arrangement comprising a sheathed optical fibre bundle within a carrier tube in which the carrier tube is slightly larger than the sheath and the sheathed optical fibre bundle is capable of longitudinal movement relative to the carrier tube.

Suitably, the carrier tube is sized such that it is capable of containing only one sheathed optical fibre bundle.

Suitably, the arrangement additionally comprises means for removing the sheathed optical fibre bundle from the carrier tube. Suitably, the removal means comprises a draw line.

Suitably, about the carrier tube is a further tube that preferably is of a different material to that of the sheath and the carrier tube.

Suitably, the draw line is helically wound about the optical fibres.

Suitably, the carrier tube or the sheath of the sheathed optical fibre bundle comprises means for reducing the friction between the carrier tube and the sheathed optical fibres. Suitably, the friction reducing means comprises means for reducing the contact area between the carrier tube and the sheathed optical fibres. Suitably, the friction reducing means comprises at least one rib and preferably a plurality of ribs about the circumference of the tube or sheath.

Suitably, the sheathed optical fibre bundle comprises a dry loose tube. A dry loose tube is substantially free of liquid or gel material and the fibres have at least some freedom of movement.

Suitably, the arrangement comprises at least one other tube connected to the carrier tube. Suitably, the carrier tube and the other tube are taped together. Suitably, the cabling arrangement comprises at least one other tube which other tube is a dry loose tube.

Suitably, the material of the carrier tube comprises a substantially water impermeable material. Typically the carrier tube material is a plastics material.

Suitably, the material of the sheath comprises a substantially water impermeable material. Typically, the sheath material is a plastics material.

Suitably, the sheath material consists of polypropylene. Suitably, the material of the carrier tube consists of polypropylene. Suitably the material of the further tube consists of a material selected from: a low smoke zero halogen material, polyethylene or a chemically resistant polymer alloy.

According to the present invention in a second aspect, there is provided a fibre optic cabling arrangement having an outer plastic tube of at least one layer and an inner plastic tube containing at least one optical fibre having circumferential spaced inwardly directed ribs.

According to the present invention in a third aspect, there is provided a method of installing an optical fibre member in a tubular installation pathway, the method comprising the steps of providing a carrier tube and inserting a sheathed optical fibre bundle within the carrier tube, in which the carrier tube is slightly larger than the sheathed optical fibre bundle.

Suitably, in the method the provision of the sheathed optical fibres additionally comprises the step of drawing the sheathed optical fibre bundle through the carrier tube using a draw line.

Suitably, the method comprises the step of withdrawing from the carrier tube a previous sheathed optical fibre bundle cable, which normally will be a redundant or faulty optical fibre member. Suitably, the previous cable is withdrawn using the draw line, normally by pulling on the draw line.

### Brief Description of the Drawings

The present invention will now be described, by way of example only, with reference to the drawings that follow; in which:
Figure 1 is a schematic cross-sectional view through a cabling arrangement according to a first embodiment of the present invention.
Figure 2 is a schematic cross-sectional view through a cabling arrangement according to a second embodiment of the present invention.
Figure 3 is a schematic cross-sectional view through a cabling arrangement according to a third embodiment of the present invention.

### Description of the Preferred Embodiments

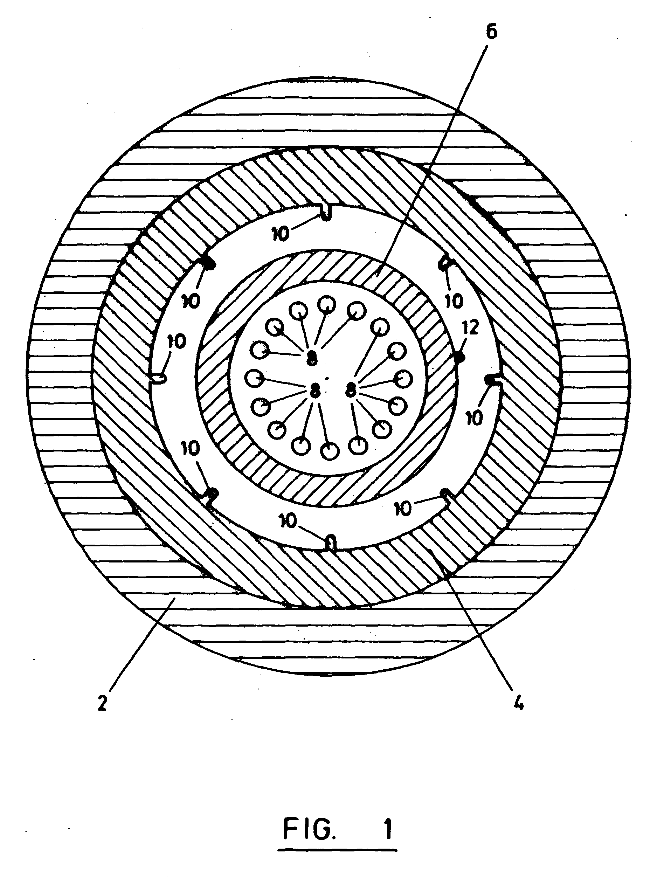

Referring to Figure 1 of the drawings that follow, there is shown a cabling arrangement according to a first embodiment of the invention, in which there is an outer plastics tube 2 within which there is a carrier tube 4 within which there is a dry loose tube 6 acting as a sheath containing a plurality of colour-coded optical fibres 8. The carrier tube 4 includes a plurality of circumferentially evenly spaced radial ribs 10 projecting inwardly so that in use the dry loose tube 6 rests on the ribs 10. A draw line 12 is shown figuratively in Figure 1.

The plastics tube 2 is extruded from low smoke zero halogen material, polyethylene or a chemically resistant polymer alloy. Low smoke zero halogen material is used for internal application or for bridges between internal/external environments. Polyethylene is used for external applications. Polyethylene is not allowed within 5 metres of the entry of a duct into a building because of the risks associated with fires. Chemically resistant polymer alloys are used for applications in which the material may be subject to substantial chemical attack. In the embodiments described herein, the material(s) used will depend on the specific application and can be selected by a person skilled in the art. The carrier tube 4 and dry loose tube 6 are extruded from polypropylene copolymer. The optical fibres 8 can be any of those known in the art. The plastics tube 2 has an inner diameter substantially equal to the external diameter of the carrier tube 4 and they are combined together.

A typical low smoke zero halogen material has a gravimetric water absorbtion of 5.6mg/cm²; the figure for polythene is 5.0mg/cm2. These results are obtained using BS 6469:1984 Method 2.6 tested at 80°C for 14 days using a 2.6mm thick sample. Using polypropylene, a result of 0.32mg/cm² is obtained (although this was using EN 60811-1-3 1995 (same as IEC 811-1-3) tested at 80°C for three weeks using a 2.6mm sample, it is believed that the result according to the BS 6469 test would be substantially similar). Thus, there is no need for a resin or gel moisture barrier.

To install the cabling arrangement according to the first embodiment of the invention, the combined tube 2 and carrier tube 4 is located in the desired location usually in a duct, for instance, underground, in a building etc. The dry loose tube 6 containing the optical fibres 8 is then pulled through the carrier tube 4 by draw line 12 when it is required. The drawing can be assisted by pushing of the dry loose tube 6 as well. The ribs 10 help to minimise friction between the carrier tube 4 and dry loose tube 6 by minimising the surface area contact therebetween.

In use, the provision of the plastics substantially water impermeable carrier tube 4 means that the tube 6 within carrier tube 4 needs not include the normal gel or resin for protecting the optical fibres 8 from the ingress of moisture. Furthermore, it enables materials to be used that reduce the emission of dangerous chemicals if the arrangement burns for any reason.

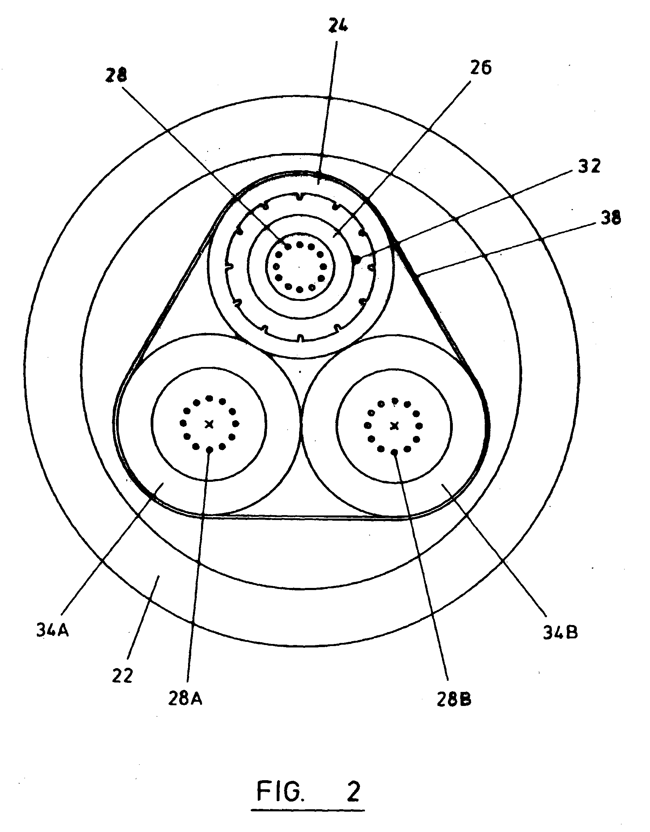

Referring to Figure 2 of the drawings that follow, there is shown a cabling arrangement according to a second embodiment of the present invention. There is shown a plastics outer tube 22 containing a carrier tube 24 within which is a dry loose tube 26 as a sheath containing optical fibres 28. The carrier tube 24 and its contents are substantially similar to those described in relation to the first embodiment of the invention (Figure 1). The material of the outer tube 22 is the same as that for outer tube 2 of the first embodiment. In addition, inside the tube 22 are two further dry loose tubes 34A, 34B containing colour coded optical fibres 28A (in tube 34A) and 28B (in tube 34B). The further dry loose tubes 34A, 34B comprise extruded polypropylene copolymer.

The three tubes 26, 34A and 34B are bound together by a helically wound polyester binding tape 38 to hold them together after stranding.

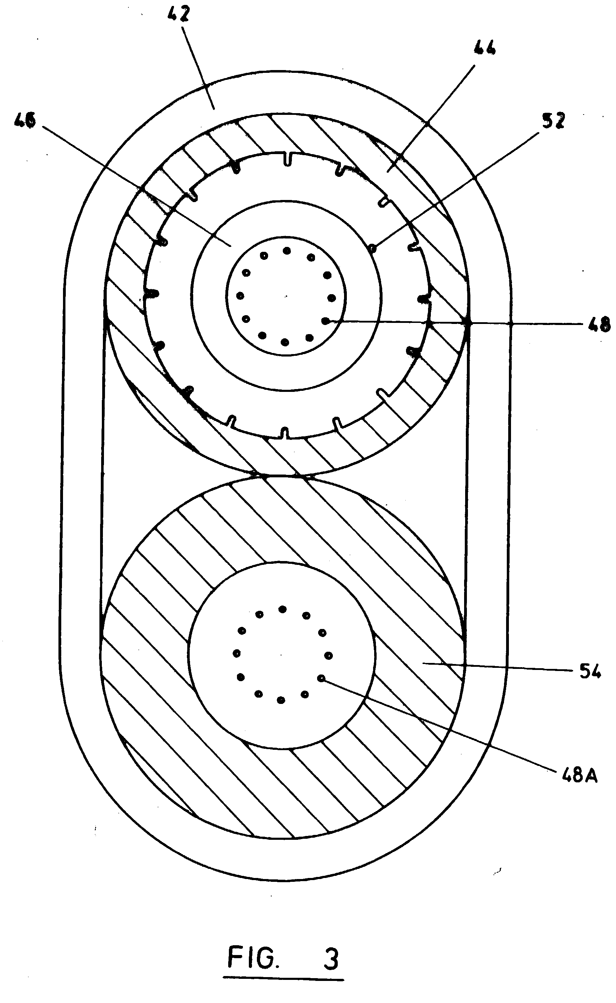

Referring to Figure 3 of the drawings that follow, there is shown a cabling arrangement according to a third embodiment of the present invention. The third embodiment is substantially similar to the first embodiment except that there is one carrier tube 44 and one further dry tube 54 which are located in a duct 42 similar to that shown in Figure 2.

In each embodiment described above, the carrier tube 4, 24, 44 is slightly larger than the sheathed optical fibre bundle 6, 8; 26; 28; 46, 48 so that there is insufficient room for a further sheathed fibre bundle. In this example, the carrier tube has an internal diameter (at the edge of the ribs 10, 30, 40) of 3.8mm while the external diameter of sheath 6, 26, 46 is 2.8mm.

The carrier tubes 4, 24 and 44 have the advantageous feature that the dry loose tubes 6, 26 and 46 respectively they contain can readily be removed and replaced or substituted. The dry loose tubes 6, 26 and 46 can be drawn out using their draw lines 12, 32 and 52 respectively with pushing if desirable. Similar dry loose tubes containing optical fibres 8, 28 and 48 respectively can be substituted in their place to upgrade the arrangement or repair breakdowns.

The embodiments of the present invention referred to above do not require gels or resins for moisture barriers thus giving much greater break out potential. Furthermore 900 µm buffered fibres could be installed as an alternative to standard 250 µm fibres giving even greater fibre breakout and fibre-to-desk potential.

The embodiments of the present invention described herein provide a metal-free cabling arrangement that can be used in a wide variety of applications without the limitations of blown-fibre installations.

As referred to above, ribs may be provided on the exterior of the dry loose tube extending in a radially outward direction.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A cabling arrangement comprising a sheathed optical fibre bundle within a carrier tube in which the carrier tube is slightly larger than the sheath and the sheathed optical fibre bundle is capable of longitudinal movement relative to the carrier tube.

2. A cabling arrangement according to claim 1, in which the carrier tube is sized such that it is capable of containing only one sheathed optical fibre bundle.

3. A cabling arrangement according to claim 1 or claim 2, in which the arrangement additionally comprises means for removing the sheathed optical fibre bundle from the carrier tube.

4. A cabling arrangement according to claim 3, in which the removal means comprises a draw line.

5. A cabling arrangement according to claim 4, in which the draw line is helically wound about the optical fibres.

6. A cabling arrangement according to any preceding claim, in which about the carrier tube is a further tube that preferably is of a different material to that of the sheath and the carrier tube.

7. A cabling arrangement according to any preceding claim, in which the carrier tube or the sheath of the sheathed optical fibre bundle comprises means for reducing the friction between the carrier tube and the sheathed optical fibres.

8. A cabling arrangement according to claim 7, in which the friction reducing means comprises means for reducing the contact area between the carrier tube and the sheathed optical fibres.

9. A fibre optic cabling arrangement having an outer plastic tube of at least one layer and an inner plastic tube containing at least one optical fibre having circumferential spaced inwardly directed ribs.

10. A method of installing an optical fibre member in a tubular installation pathway, the method comprising the steps of providing a carrier tube and inserting a sheathed optical fibre bundle within the carrier tube, in which the carrier tube is slightly larger than the sheathed optical fibre bundle.
